# EUROPEAN PATENT APPLICATION

(11) **EP 4 667 897 A1**
(43) Date of publication of application: **24.12.2025**
(21) Application number: 24756897.5
(22) Date of filing: 14.02.2024
(51) Int. Cl.: G01M 99/00

(54) **CONDITION MONITORING SYSTEM**

(30) Priority: 17.02.2023 JP 2023023364
(71) Applicant: NTN Corporation, Osaka-shi Osaka 530-0005 (JP)
(72) Inventor: SHIMOYAMA, Yota, Kuwana-shi, Mie 511-8678 (JP); HASEBA, Takashi, Kuwana-shi, Mie 511-8678 (JP)
(74) Representative: Grünecker Patent- und Rechtsanwälte PartG mbB
(86) International application number: PCT/JP2024/004956
(87) International publication number: WO 2024/172056

(57) **Abstract**

A condition monitoring system is provided which can be implemented as an inexpensive, small, and power-saving device with restricted computational resources and which can perform condition monitoring and diagnosis of a to-be-monitored apparatus with a relatively small amount of computation. A condition monitoring system (10) includes a measurement data processing unit configured to calculate at least one piece of processed data from measurement data, and the measurement data processing unit (11) is configured to execute a subdivision step of subdividing time-series data being the measurement data along time series in a time direction, an FFT step of calculating spectral data by fast Fourier transform for each piece of subdivision data obtained by subdividing the time-series data, a statistical step of extracting at least one partial spectrum of a portion of bands from the spectral data and calculating at least one amount of statistics of the at least one partial spectrum, and an integration step of arranging the at least one amount of statistics in a time series order of original pieces of the subdivision data to obtain the at least one piece of processed data.

## Description

### TECHNICAL FIELD

The present invention relates to a condition monitoring system for monitoring conditions of mechanical components or the like.

### BACKGROUND ART

In order to detect or diagnose abnormalities in machinery, measurement of sounds or vibration and analysis of the result are generally performed.

The below-identified Patent Document 1 proposes the invention of an abnormality diagnosis apparatus for machinery equipment in which the presence or absence of abnormality and the location of the abnormality are determined using frequency components of diagnostic spectral data based on envelope analysis and frequency analysis by fast Fourier transform (hereinafter may be abbreviated as "FFT") of the measured waveforms.

The below-identified Patent Document 2 proposes a damage diagnosis method of a rolling bearing including acquiring vibration accelerations of a bearing in time series, performing bandpass filtering processing and envelop processing in an analog domain and then performing an A/D (analog/digital) conversion, and applying FFT to the converted data. The peak frequency and the feature frequency of the FFT-ed result are compared to determine the damage to the rolling bearing.

### PRIOR ART DOCUMENT(S)

### PATENT DOCUMENT(S)

Patent Document 1: Japanese Unexamined Patent Application Publication No. 2007-285875
Patent Document 2: Japanese Unexamined Patent Application Publication No. H09-113416 (1997)

### SUMMARY OF THE INVENTION

### PROBLEMS TO BE SOLVED BY THE INVENTION

However, when there are many or small articles to be detected or diagnosed, there are also limitations to computational resources which can be allocated to condition monitoring or diagnosis of the articles. When devices for performing diagnosis also need to be inexpensive, small and power-saving, it is difficult to use computationally intensive condition monitoring or diagnosis methods.

In the abnormality diagnosis apparatus disclosed in Patent Document 1, since the measured waveforms have many data pieces, required computational resources are also huge in the filtering processing associated with the envelope processing or the FFT processing for the frequency analysis.

In the damage diagnosis method disclosed in Patent Document 2, since many operational amplifiers and high-precision passive elements are required in the bandpass filtering processing and the envelope processing in the analog domain, the cost of the device for executing the method is increased and the noise becomes more likely to be superimposed. In addition, the power consumption is also large. Further, the required computational resources are prone to be large even in the FFT processing.

In view of the background described above, it is an object of the present invention to provide a condition monitoring system which can be implemented as an inexpensive, small, and power-saving device with restricted computational resources and which can perform condition monitoring and diagnosis of a to-be-monitored apparatus with a relatively small amount of computation.

### MEANS FOR SOLVING THE PROBLEMS

In order to achieve the above object, according to a first arrangement, the present invention provides a condition monitoring system including:
a measurement data processing unit configured to calculate at least one piece of processed data from measurement data,
the measurement data processing unit being configured to execute:
   a subdivision step of subdividing time-series data along time series in a time direction, the time-series data being the measurement data or first processed data calculated from the measurement data;
   an FFT step of calculating spectral data by fast Fourier transform for each piece of subdivision data obtained by subdividing the time-series data;
   a statistical step of extracting at least one partial spectrum of a portion of bands from the spectral data and calculating at least one amount of statistics of the at least one partial spectrum; and
   an integration step of arranging the at least one amount of statistics in a time series order of original pieces of the subdivision data to obtain the at least one piece of processed data.

That is, since calculation of the spectral data, extraction of the portion of bands, and calculation of the at least one amount of statistics are performed for each piece of the subdivision data subdivided in the time direction and the at least one amount of statistics is finally arranged in a time series order, and any processing with a high load can be performed with the small number of processing steps by the subdivision, it is possible to obtain the at least one piece of processed data with smaller computational resources than those of the case where the time-series data is directly used. The subdivision is at least 10 divisions, and preferably at least 100 divisions. Since particular bands are extracted from the spectrums of subdivided pieces of the subdivision data subdivided, it is necessary to ensure the number of individual subdivided pieces of the subdivision data so that frequency resolution of the spectrum does not become too low. Specifically, the number of individual subdivided pieces of the subdivision data is at least 10, and preferably 100 or more.

According to a second arrangement of the condition monitoring system according to the present invention, data along time series of any one physical quantity of a to-be-monitored apparatus that are a jerk, an angular jerk, an acceleration, an angular acceleration, a displacement, an angular displacement, a position, a phase and a pressure, may be used as the measurement data.

According to a third arrangement of the condition monitoring system according to the present invention, the condition monitoring system may further include a diagnosis unit configured to execute
a second FFT step of calculating second spectral data by fast Fourier transform from the at least one piece of processed data, and
a determination step of calculating a determination result which is a statistical value or a determination value, from the second spectral data.

In addition, according to a fourth arrangement of the condition monitoring system according to the present invention, in any one of the first to third arrangements, the portion of bands to be extracted may be changeable, and plural pieces of processed data based on different portions of the bands from each other may be calculated as the at least one piece of processed data.

Further, according to a fifth arrangement of the condition monitoring system according to the present invention, in any one of the first to fourth arrangements, in the subdivision step, the number of pieces of the subdivision data may be set to a preset number of data pieces, or the number of subdivisions of the subdivision data may be set to a preset number of divisions.

Furthermore, according to a sixth arrangement of the condition monitoring system according to the present invention, in any one of the first to fifth arrangements, the subdivision step may be started before the measurement data processing unit acquires all pieces of the measurement data.

Furthermore, according to a seventh arrangement of the condition monitoring system according to the present invention, in any one of the first to fifth arrangements, the subdivision step may be started after the measurement data processing unit acquires all pieces of the measurement data.

Furthermore, according to an eighth arrangement of the condition monitoring system according to the present invention, in any one of the first to seventh arrangements, the time-series data may be subdivided such that each piece of subdivision data that is adjacent to one piece or two pieces of subdivision data in time series overlaps with the one piece or the two pieces by a predetermined portion.

Furthermore, according to a ninth arrangement of the condition monitoring system according to the present invention, in any one of the first to eighth arrangements, the spectral data may be any one of an amplitude spectrum, a power spectrum, or a power density spectrum.

Furthermore, according to a tenth arrangement of the condition monitoring system according to the present invention, in any one of the first to ninth arrangements, the at least one amount of statistics may be any one of a maximum, a sum, a mean, or a root mean square of the at least one partial spectrum.

Furthermore, according to an eleventh arrangement of the condition monitoring system according to the present invention, in any one of the third to tenth arrangements depending from the third arrangement, the statistical value in the determination step of the diagnosis unit may be any one of a maximum, a sum, a mean, or a root mean square of the second spectral data.

### EFFECTS OF THE INVENTION

In accordance with the condition monitoring system according to the present invention, since the time-series data with the large number of data pieces is not directly processed, and is handled as individual pieces of subdivision data subdivided in the time direction, it is possible to reduce memory capacity and calculation amount required for each calculation, and to install the condition monitoring system even in an inexpensive, small and power-saving device with restricted computational resources. Thus, it is possible to monitor conditions of various apparatuses.

### BRIEF DESCRIPTION OF THE DRAWINGS

Fig. 1 is a diagram showing a basic arrangement example of a condition monitoring system according to the present invention.
Fig. 2 is a diagram of a first flow example for calculating processed data from measurement data by the condition monitoring system according to the present invention.
Fig. 3 is a graphical plot showing an example of time-series data handled by the condition monitoring system according to the present invention.
Fig. 4 is an example of a group of graphs showing the transition for determining spectral data, partial spectrums and amounts of statistics from the time-series data.
Fig. 5 is a diagram of a second flow example for calculating processed data for plural bands by the condition monitoring system according the present invention.
Fig. 6 is a diagram of a third flow example for calculating processed data for plural bands by the condition monitoring system according to the present invention.
Fig. 7 is a graphical plot showing an example of second spectral data obtained by applying fast Fourier transform to the processed data.
Fig. 8 is a diagram showing the maximum and the root mean square calculated from the second spectral data of Fig. 7.
Fig. 9 is a diagram showing the root mean square calculated by extracting ranges around peaks from the second spectral data of Fig. 7.
Fig. 10A is a diagram showing an example of spectrums obtained by weighting the second spectral data of Fig. 7.
Fig. 10B is a diagram showing the function used for weighting in Fig. 10A.
Fig. 11 is a graphical plot showing an example of the processed data.
Fig. 12 is a diagram showing an example obtained by applying bandpass filtering processing to the processed data of Fig. 11.
Fig. 13 is a diagram showing an example obtained by applying squaring processing to the processed data of Fig. 11.
Fig. 14 is a diagram showing an example obtained by applying noise level subtraction processing to the processed data of Fig. 11.
Fig. 15 is a functional block diagram showing a first arrangement example when implementing the condition monitoring system according to the present invention.
Fig. 16 is a functional block diagram showing a second arrangement example when implementing the condition monitoring system according to the present invention.
Fig. 17 is a functional block diagram showing an applied form in which a display device is added to the second arrangement example.
Fig. 18 is a functional block diagram showing an applied form in which a server and a display device are added to the second arrangement example.
Fig. 19 is a functional block diagram showing a third arrangement example when implementing the condition monitoring system according to the present invention.
Fig. 20 is a functional block diagram showing an applied form in which a server is added to a field network of the third arrangement example.

### BEST MODE FOR CARRYING OUT THE INVENTION

The present invention is directed to a condition monitoring system for monitoring conditions of a to-be-monitored apparatus (apparatus to be monitored) such as a machine or a component. The condition monitoring system includes a measurement data processing unit configured to calculate processed data from measurement data relating to the to-be-monitored apparatus. It is possible to grasp the conditions of the to-be-monitored apparatus by using the calculated processed data directly for determination or by further calculating the calculated processed data so as to be used for analysis.

The condition monitoring system according to the present invention may be a separate device directly connected to the to-be-monitored apparatus, may be a device disposed in the to-be-monitored apparatus, or may be a separate device indirectly connected to the to-be-monitored apparatus via a network such as a field network.

The measurement data used by the condition monitoring system according to the present invention is obtained by a data acquisition unit such as a sensor attached to the to-be-monitored apparatus or a measurement apparatus for measuring situations of the to-be-monitored apparatus from the outside. For example, the data acquisition unit may be configured to receive a result received in the form of a sensor signal from the sensor in a measurement unit of the condition monitoring system, and convert the result into measurement data, or the condition monitoring system may be configured to receive and acquire, via a network, data in a form available as measurement data.

The processed data calculated by the condition monitoring system according to the present invention may be converted into a human-recognizable format and outputted to be used for determination of the condition by an operator, the processed data may be used for mechanical determination according to predetermined conditions, or the processed data may be fed back as a statistical value to the to-be-monitored apparatus.

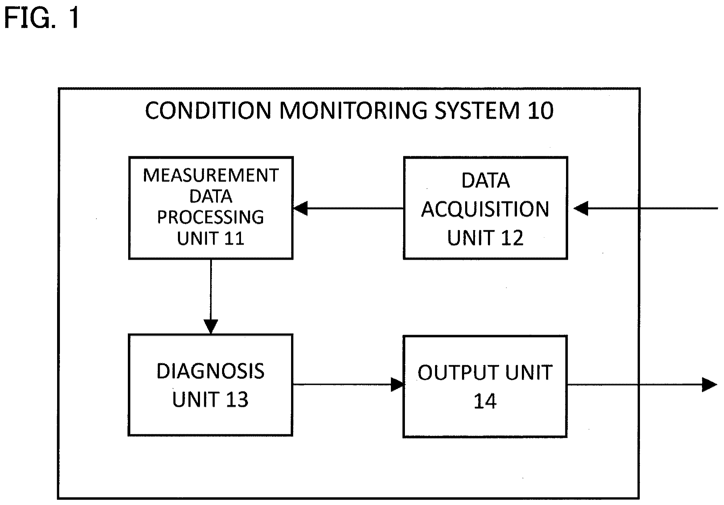

A basic arrangement example of the condition monitoring system 10 according to the present invention will be described with reference to Fig. 1. The condition monitoring system 10 at least includes a measurement data processing unit 11 configured to calculate processed data from measurement data.

The condition monitoring system 10 further includes a data acquisition unit 12 configured to acquire measurement data to be handled by the measurement data processing unit 11. In Fig. 1, the data acquisition unit 12 is exemplified as receiving a sensor signal and converting it into measurement data for acquisition of the measurement data, but the data acquisition unit 12 may be, e.g., a network interface for receiving measurement data from the outside.

As the measurement data, for example, data along time series of any one of physical quantities of the to-be-monitored apparatus that are a jerk, an angular jerk, an acceleration, an angular acceleration, a displacement, an angular displacement, a position, a phase and a pressure, may be used. However, these are merely examples, and the measurement data available in the present invention for monitoring the conditions of the to-be-monitored apparatus is not particularly limited as long as the measurement data is data of a physical quantity which can change along time series.

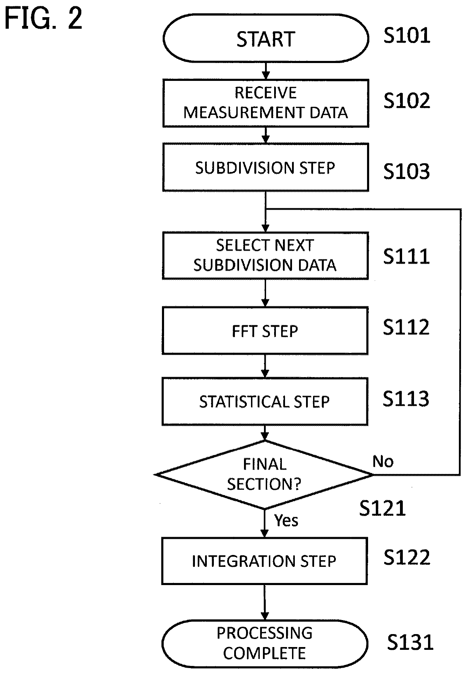

A first flow example of the steps of calculating the processed data from the measurement data by the condition monitoring system 10 according to the present invention will be described with reference to Fig. 2. In the first flow example, pieces of the measurement data to be handled are received in a lump and then processed. In this case, the condition monitoring system 10 needs to include a temporary storage unit (not shown) having a sufficient capacity to store pieces of measurement data to be handled in one processing. The temporary storage unit required may be a non-volatile memory or a volatile memory. In the first flow example, since acquisition and processing of data in real time are not required, even if the response time becomes longer, there is no risk of causing any problems in the processing itself.

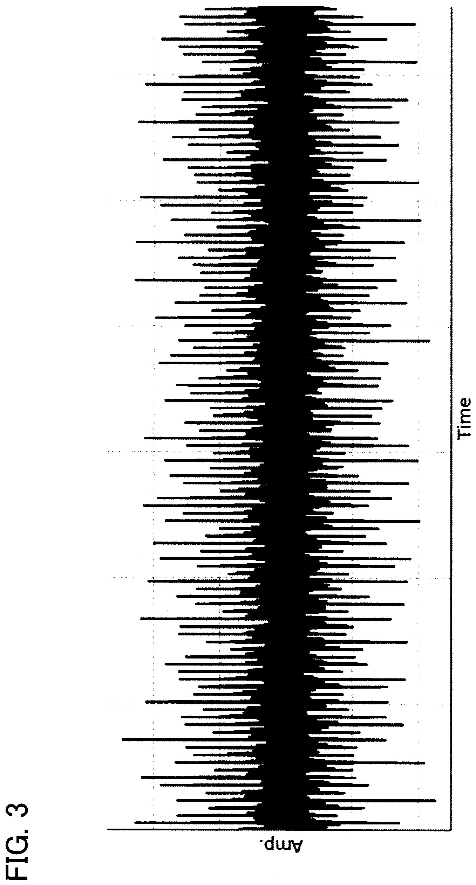

First of all (S101), the data acquisition unit 12 receives measurement data from the outside, e.g., from external sensors (S102). If the measurement data is time-series data along time series, it is possible to handle the measurement data directly. Although not shown in the flow, if the measurement data is not data along time series at the data acquisition stage, a step of converting the measurement data into first processed data along time series is executed, and the converted first processed data is used as time-series data in the subsequent processing steps. The number of pieces of the time-series data is preferably at least 1000 (i.e., 1000 or more), and more preferably 10000 or more. Since a spectrum is determined by fast Fourier transform described later, if the number thereof is too small, it will be difficult to ensure sufficient determination accuracy. Fig. 3 shows an example of the time-series data. The horizontal axis refers to a time axis, and the vertical axis refers to a voltage received as a signal.

A subdivision step of subdividing the time-series data in a time direction into pieces of subdivision data is executed (S103). The term "subdivision" means that the number of divisions is preferably at least 10 divisions (i.e., 10 divisions or more), more preferably 100 divisions or more, and most preferably 1000 divisions or more. As a specific method of subdivision, the time-series data may be equally subdivided such that the number of individual pieces of subdivision data becomes a preset number of data pieces, or the time-series data may be equally divided so that the number of divided pieces of subdivision data becomes a preset number of divisions. Since the number of divisions set herein is proportional to the maximum frequency which can be grasped during processing in a diagnosis unit described later, it is necessary to ensure the number of divisions to the extent that the maximum frequency includes a frequency which is a characteristic of the to-be-monitored apparatus. In addition, since the number of pieces of subdivision data set herein is proportional to a frequency resolution when extracting a specific band, it is necessary to ensure the number of pieces of subdivision data to the extent that a targeted band can be extracted.

Also, the time-series data may be subdivided (i) such that individual pieces of subdivision data do not overlap with each other; (ii) such that each piece of subdivision data that is adjacent to one piece or two pieces of subdivision data in time series partially overlaps with the one piece or the two pieces; or (iii) such that data that is not included in the subdivision data exist between pieces of subdivision data that are each adjacent to one piece or two pieces of subdivision data in time series. By such data overlap, it is possible to store some of spectral information lost by division between pieces of subdivision data. The overlapping portion of each piece of subdivision data accounts for preferably 1% or more of the piece, and more preferably 20% or more of the piece. If the overlapping portion is too small, the effect of avoiding information loss due to data overlap is likely to be insufficient. The "overlapping portion of each piece of subdivision data accounts for 1% or more of the piece" means that the portion of the piece that is common to one piece or two pieces of subdivision data that are adjacent to the piece in time series is 1% in total, in other words, if the piece is adjacent to the two pieces, the portion of the piece that is common to each of the two pieces is 0.5%.On the other hand, the overlapping portion is preferably 180% or less, and more preferably 120% or less of each piece of subdivision data. If the overlapping portion exceeds 180%, the processing efficiency will be too bad. If the overlapping portion is 100%, this means "a state where each piece of the time-series data is included twice in the subdivision data", and if the overlapping portion exceeds 100%, this means that some data is included three times in the subdivision data.

Next, individual subdivided pieces of the subdivision data are individually processed. Since the following two steps are performed for each piece of the subdivision data independently, steps (S112 and S113) for subdivision data in a selected section in time series (S111) may be performed continuously or in parallel for each piece of subdivision data. In addition, the selection of the pieces of subdivision data is not necessarily performed in a time series order. However, since all subdivided pieces of the subdivision data are processed, and the processed ones are then finally integrated again in a time series order, the selection of the individual pieces of subdivision data is preferably performed in a time series order because the management of loop processing is easy.

For the subdivision data in the selected section in time series (S111), an FFT step of calculating spectral data by fast Fourier transform is executed (S112). A commonly used algorism can be used for the fast Fourier transform. In the present invention, since the calculations are performed by reducing the number of pieces of subdivision data per one fast Fourier transform, fast Fourier transform can be sufficiently executed even in a small and power-saving device.

Further, as the spectral data, any one of an amplitude spectrum, a power spectrum or a power density spectrum can be appropriately selected according to the required situation.

A statistical step of extracting a partial spectrum of a portion of bands from the spectral data obtained by executing the FFT step and determining an amount of statistics of the partial spectrum is executed (S113). Specifically, the statistical step includes two stages. In the first stage of the statistical step, among the entire frequency bands of the spectral data, the partial spectrum of the portion of bands is extracted.

As the portion of bands extracted herein, specifically, it is efficient to extract a limited band including, as a physical quantity of the to-be-monitored apparatus, frequencies that frequently detect characteristic behavior when a failure or abnormality occurs. Useful ranges include any band within a range of 10 Hz to 10 kHz, and by extension, any band within a range of 0.1 Hz to 30 kHz, and it is preferable to partially select a band around a frequency at which characteristic behavior is readily identifiable within the range. However, without being limited to this, a band that is not a known band may be extracted so that an unexpected situation can be detected even when it occurs. For this reason, it is desirable that the band to be extracted can be arbitrarily set and changed, depending on the type of the to-be-monitored apparatus, monitoring purpose, and other factors. The band to be extracted may be a plurality of bands. A flow example in the case of extracting the plurality of bands will be described later.

In the second stage of the statistical step, an amount of statistics of the extracted partial spectrum is calculated. The amount of statistics can be appropriately selected from a value that can be calculated from a value constituting the partial spectrum such as a maximum, a sum, a mean, or a root mean square of the partial spectrum. The amount of statistics is not particularly limited to these as long as they can be calculated.

After the above-described steps S112 and S113 have been executed for all pieces of the subdivision data, the subsequent integration step (S122) is executed.

In the integration step (S122), the amounts of statistics obtained for all pieces of the subdivision data are arranged and integrated in a time series order of the original pieces of subdivision data to obtain processed data outputted from the measurement data processing unit. The same amount of statistics is used for integration along the time series in the integration step (S122). Rather than using the maximum as the amount of statistics for the first piece of subdivision data and using the mean as the amount of statistics for another piece of subdivision data, if the maximum is selected as the amount of statistics, the maximums are arranged and integrated. That is, when the flow of Fig. 2 is progressed, the selected amount of statistics is not changed from the processing for the subdivision data of the first section to the processing for the subdivision data of the final section.

Alternatively, a plurality of amounts of statistics may be calculated in the statistical step (S113) and integration may be performed for each amount of statistics in the integration step to obtain processed data for each amount of statistics. For example, such processing may be performed that maximums and means are calculated in the statistical step (S113) and the maximums and the means are integrated as separate pieces of processed data in the integration step (S122), respectively. In either processing, a memory capacity used is preferably small. Alternatively, by storing data in a flash memory or a PSRAM, it is possible to temporarily store a large amount of spectral data, and the amount of data to be temporarily stored is not a significant problem. Since the spectral data does not include phase information, the amount of spectral data is reduced by half in comparison with the original time-series data. On the other hand, since a flow of redoing FFT processing consumes a large amount of CPU resources and RAM, implementation of the flow of redoing the FFT processing with an inexpensive device becomes difficult, and therefore the flow of redoing the FFT processing is not preferable in the present invention.

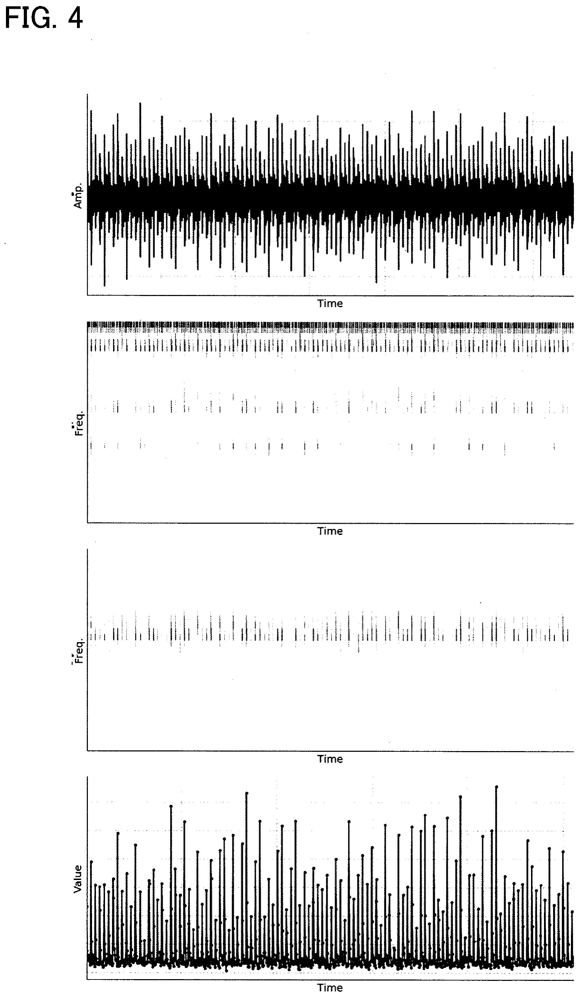

Fig. 4 shows an image of the transition of obtaining spectral data, partial spectrums and amounts of statistics for each piece of the subdivision data from the original time-series data. Although the fast Fourier transform, extraction and calculation of the amount of statistics are performed for each section in time series in practice, Fig. 4 shows a hypothetical diagram of what individual pieces of subdivision data in time series, which will be finally integrated in a time series order, and the spectral data calculated therefrom and calculation of the amount of statistics would look like if they are arranged in time series at each stage. The first row diagram shows time-series data similar to that in Fig. 3. The second row diagram shows spectral data for each piece of the subdivision data. Each of vertically arranged strips is a piece of spectral data for each subdivided piece of the subdivision data, and its vertical axis indicates a frequency and its color density indicates a spectral value. Its horizontal axis indicates time series in which a large number of pieces of the spectral data are imaginarily arranged. The third row diagram is a diagram in which only a portion of bands along the vertical axis, i.e., in the frequency direction is extracted from the spectral data in the second row diagram. That is, each of vertically arranged strips is a partial spectrum similar to that in the second row diagram, and its vertical axis indicates a frequency and its color density indicates a spectral value. Its horizontal axis indicates time series in which extracted pieces of the partial spectral data are imaginarily arranged. The fourth row diagram is a diagram in which the amounts of statistics calculated for the respective partial spectrums in the third row diagram are arranged in a time series order. That is, the fourth row diagram indicates the processed data after the integration step.

A reduction rate of the number of data pieces in these steps is roughly as follows. First of all, in the first row diagram to the second row diagram, the entire number of data pieces is reduced by half because the phase information is not included. In the extraction that is the first stage of the statistical step transitioning from the second row diagram to the third row diagram, the number of data pieces is reduced to about a fraction to a few tenths of the original data. Further, in the second stage of the statistical step transitioning from the third row diagram to the fourth row diagram, since the handled data is changed from the partial spectrum to single data such as a maximum or a mean, the number of data pieces is reduced to about a few tenths to a few ten-thousandths of the original data.

It is preferable that a band extracted in the first stage of the statistical step can be arbitrarily set and changed. For example, if characteristic behavior can be detected at multiple frequencies A and B in separate bands, for spectral data obtained from the same time-series data, one band including the frequency A and another band including the frequency B are respectively extracted, the amounts of statistics are respectively calculated in the statistical step, and the respective pieces of processed data are acquired in the integration step. Thereby, the processed data including information on the frequency A and the processed data including information on the frequency B are respectively outputted. Thus, by making it possible to change the extracted bands, the condition monitoring system can obtain a determination result described later using the respective pieces of processed data and monitor multiple possible situations in parallel.

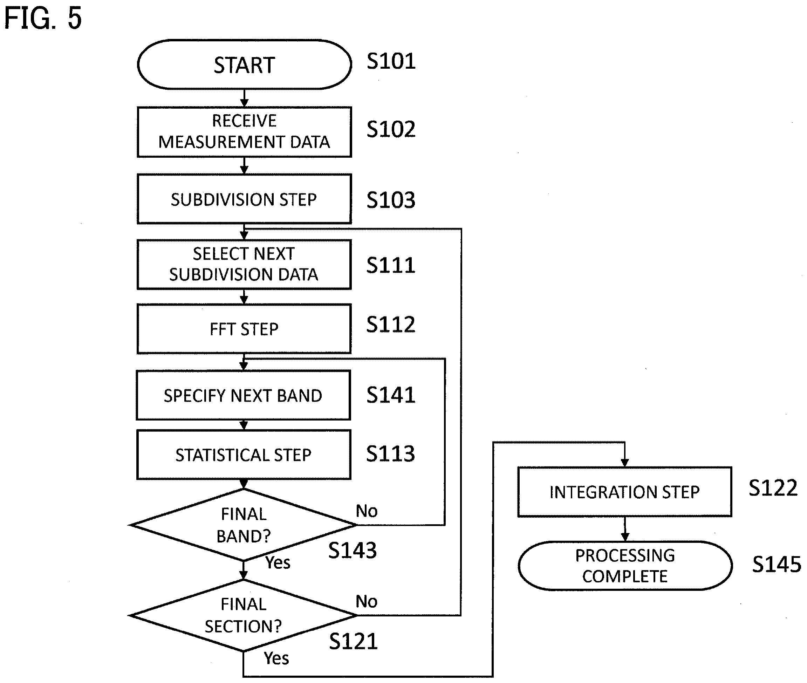

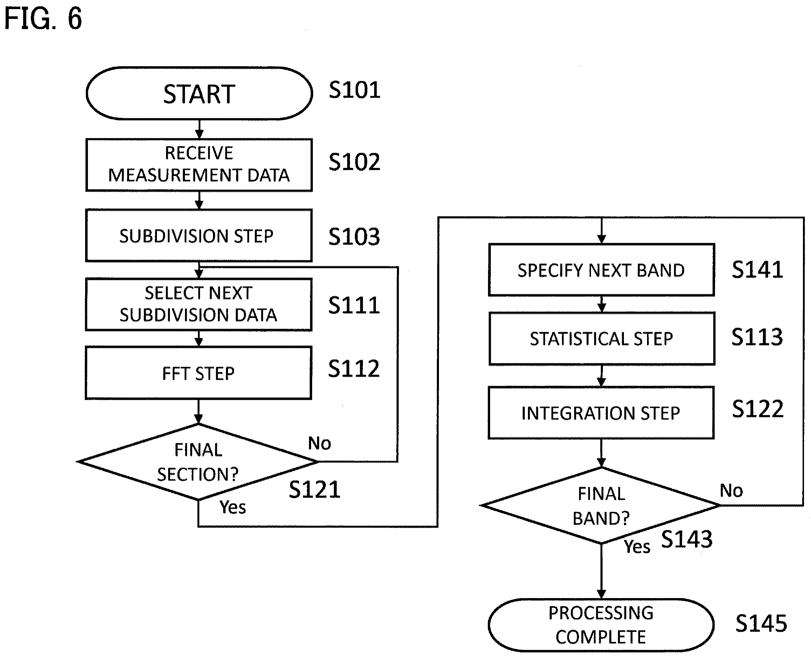

Second and third flow examples of the steps of calculating the pieces of processed data for a plurality of bands as described above from the measurement data by the condition monitoring system 10 according to the present invention will be described with reference to Figs. 5 and 6. The plurality of bands to be selected and an order of the bands to be selected are set before the start stage (S101), and the measurement data processing unit 11 can read the setting. Information on the band to be set is recorded in a storage unit (not shown) in advance, and can be set by command entry from the outside or by receiving and reading data. The procedure from the step of receiving the measurement data (S102) to the FFT step is the same as those of the first flow. Then, after the FFT processing for each piece of the subdivision data or after the FFT processing of all pieces of the subdivision data, the band to be extracted is specified from information on the band to be set.

In the second flow shown in Fig. 5, each time the subdivision data is selected, a plurality of bands are specified in order. First of all, similar to the first flow, the subdivision data is selected (S111), and the FFT step is executed (S112). Then, one band is specified (S141), the statistical step (S113) for the one band is executed, and these processing steps are performed in order until reaching the final band of the plurality of bands (S143 → No → S141). When all statistical steps for the plurality of bands have been completed for the subdivision data in question (S143 → Yes), similar processing is performed for the next subdivision data (S121 → No → S111). Since, in the second flow, the spectral data stored in the memory is that of only the subdivision data under the processing, the second flow can be easily implemented even in a device with a small memory capacity.

In the third flow shown in Fig. 6, after the FFT processing for all pieces of subdivision data has been performed, a plurality of bands are specified in order. First of all, similar to the first flow, the subdivision data is selected (S111), and the FFT step is executed (S112). Then, prior to the statistical step, selection of the subdivision data and the FFT step are executed in order until the final section is reached (S121 → No → S111). When the FFT steps for all sections have been completed (S121 → Yes), the first band of the plurality of bands is specified (S141), and then the statistical step (S113) and the integration step (S122) are executed. These processing steps are performed in order until the final band of the plurality of bands is reached (S143 → No → S141). Since, in the third flow, it is necessary to temporarily store the pieces of spectral data for the entire sections of the received measurement data, it is necessary to ensure the corresponding memory capacity. If an amount of the processed data is large (that is, if the number of divisions is large) or if there are many types of bands to be extracted and many types of the amount of statistics, the third flow can be preferably used. Since the processed data is sequentially outputted for each type, it is not necessary to store all pieces of processed data and memory capacity consumption can be reduced in this regard.

The embodiments in which the band is specified in the middle of the second and third flows shown in Figs. 5 and 6 are merely examples, and the first band may be specified at the start stage. In addition, the band extracted in the subsequent flow can be sequentially changed.

In the second and third flow examples, the processing content of the statistical step itself is similar to that of the first flow. The integration step of arranging the amounts of statistics in a time series order is also the same as in the first flow.

In the description of the above-described first to third flow examples, an example is shown in which the pieces of measurement data to be handled are received by the measurement data processing unit 11 in a lump and are then processed, that is, an example is shown in which all pieces of measurement data have been acquired and then the subdivision step is started. In the condition monitoring system according to the present invention, which is not limited to the above-described example, the subdivision step may be started before the measurement data processing unit 11 has acquired all pieces of measurement data. In this case, the basic procedure is the same as those of the first to third flow examples, but the subdivision step S103 is executed only for the measurement data having been received at the start stage, and while the steps of S111 to S113 are executed, the remaining pieces of measurement data are acquired in parallel, and each time the measurement data for one piece of subdivision data is newly acquired, the measurement data is divided as new subdivision data. If the measurement data cannot be acquired in time, the processing is suspended at the stage of selecting the next subdivision data in S111, and when a piece of subdivision data to be processed is generated, the subsequent FFT step (S112) and statistical step (S113) are executed. Since these processing steps are performed in order, the determination of whether or not the final section has been reached (S121) should be made not based on whether or not the subdivision data remains in the memory, but based on whether or not subdivision of measurement data to be acquired has been completed up to the final section and the subdivision data in the final section has been read. By sequentially processing the subdivision data in parallel with the measurement, less space is required to store the time-series data. However, if the processing of calculating the statistical value from the subdivision data is performed after data acquisition of time-series data, it is necessary to store a correspondingly larger amount of time-series data.

In accordance with the condition monitoring system 10 according to the present invention, by outputting processed data obtained by the measurement data processing unit 11 directly or by determining a determination result and then outputting the determination result, it is possible to monitor the condition of the to-be-monitored apparatus by an observer who has observed the output or a device which has received the output. Since the number of pieces of the processed data is significantly reduced in comparison with that of the original measurement data, the processed data is data which is easy to read, but the processed data may still have dozens to thousands of data pieces along a time series order. Since information may be hard to be understood in such a condition of the processed data, the condition monitoring system 10 preferably includes a diagnosis unit 13 configured to calculate a determination result which is a statistical value or a determination value, using the processed data. The determination result is a numerical value or a signal which can determine any condition of the to-be-monitored apparatus.

As processing performed by the diagnosis unit 13, various embodiments can be selected according to the type of the to-be-monitored apparatus or the determination result to be obtained. As an example, a second FFT step of calculating second spectral data from the processed data by fast Fourier transform is preferably executed. In the second spectral data, it becomes easier to detect a feature amount for frequency that remains in the processed data even after the number of data pieces has been reduced in the measurement data processing unit 11. The diagnosis unit 13 is preferably configured to execute a determination step of calculating a determination result which is a statistical value or a determination value, from the second spectral data.

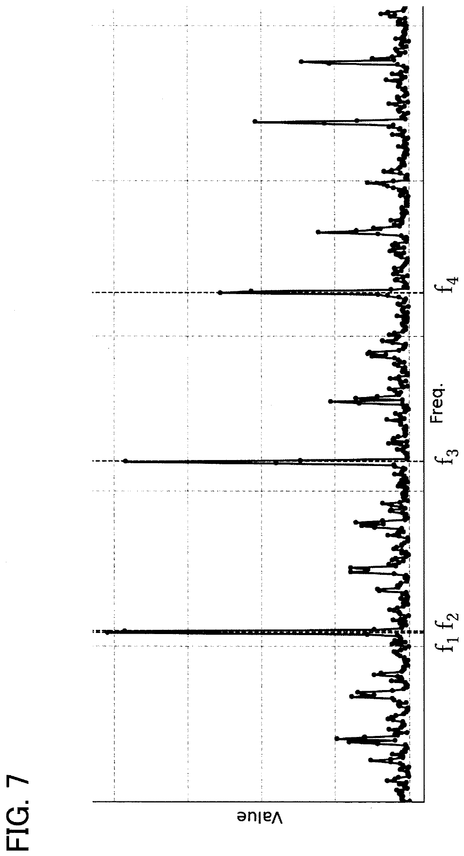

An example of the determination step in the diagnosis unit 13 will be described with reference to Figs. 7 to 14. Fig. 7 shows an example of the second spectral data obtained by fast Fourier transform of the processed data. Frequencies fₙ (f₁ to f₄) indicating top four peaks of the spectrum are shown as the statistical value. Examples of the embodiment include a case where any features can be found in these frequencies themselves and a case where any features can be found in an order of these frequencies. In addition, examples of the embodiment include a case where a determination value of True/False of whether or not any one fₙ of the frequencies indicating such peaks exists in a vicinity of the feature frequency f_{f} in which a spectral value is prone to become large in the observation, for example, in a range of from 0.95 x f_{f} to 1.05 f_{f}, is used as the determination result.

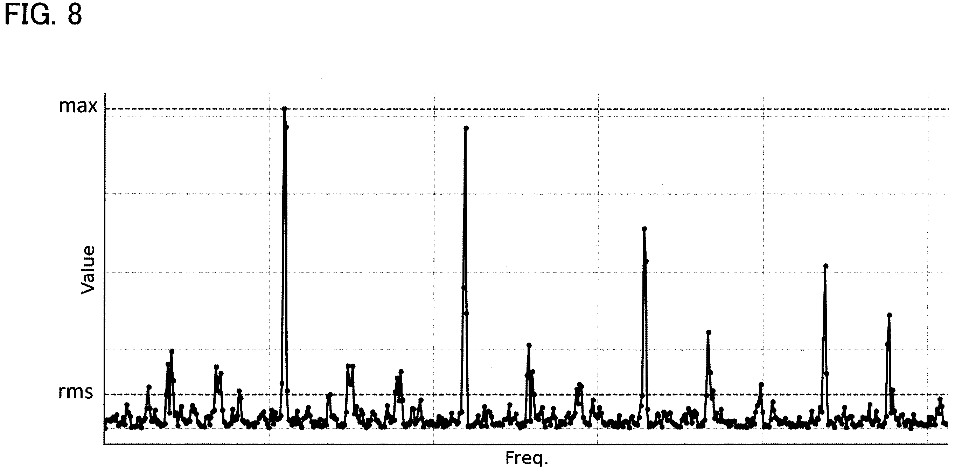

In addition, as shown in Fig. 8, examples of the embodiment include a case where a maximum (max) and a root mean square (rms) of the second spectral data are calculated and these statistical values are used as the determination result.

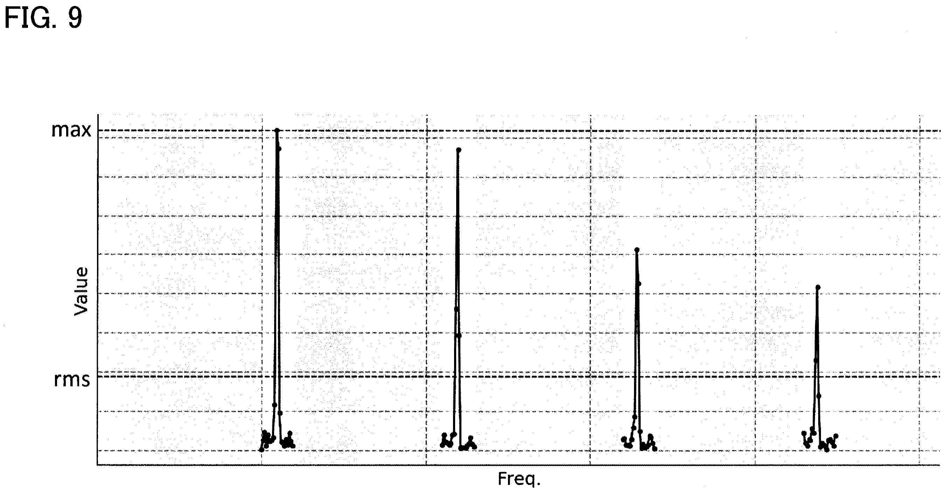

Further, as shown in Fig. 9, examples of the embodiment include a case where limited ranges around the respective peaks of the second spectral data are extracted, a root mean square (rms) is calculated using the extracted pieces of data, and such a statistical value is used as the determination result.

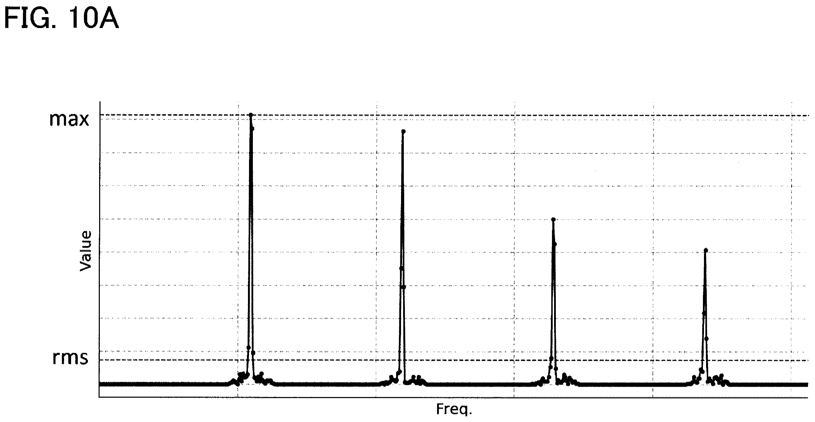

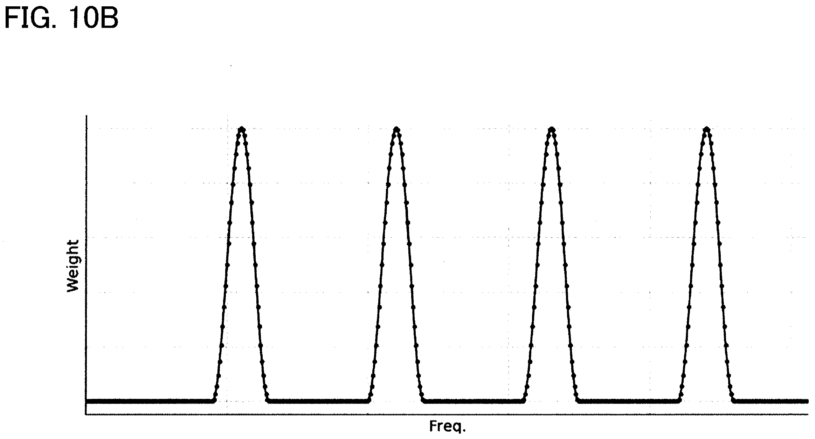

Furthermore, as shown in Fig. 10A, examples of the embodiment include a case where a spectrum obtained by weighting the second spectral data is determined. The weighting is a multiplication of the second spectral data with a window function emphasizing frequencies around specific frequencies as shown in Fig. 10B. The window function shown herein is merely an example, and an appropriate window function may be selected depending on the situation. As the frequency to be weighted, an embodiment is exemplified in which a frequency having a strong tendency to appear in the physical quantity of the monitored to-be-monitored apparatus is selected.

Furthermore, the diagnosis unit 13 may be configured to diagnose the condition of the to-be-monitored apparatus from the spectral value or the amount of statistics so as to use the result (normality, caution, warning, abnormality, stop, etc.) as the determination result. Examples of a method of diagnosis include comparison with a predetermined threshold, trend analysis and machine learning.

Furthermore, the diagnosis unit 13 may be configured to perform numerical processing for the processed data to obtain the determination result, without executing the second FFT step. Since the processed data is significantly reduced in size compared to the original time-series data, even if bandpass filtering processing, squaring processing, subtraction processing, and other processing tasks, which would be difficult to be implemented on the original time-series data due to the enormous amount of calculation required, are performed, the amount of calculation required is small enough to be implemented even on a power-saving terminal, making it possible to implement the method. The amount of statistics may be directly calculated without such fast Fourier transform to obtain the determination result.

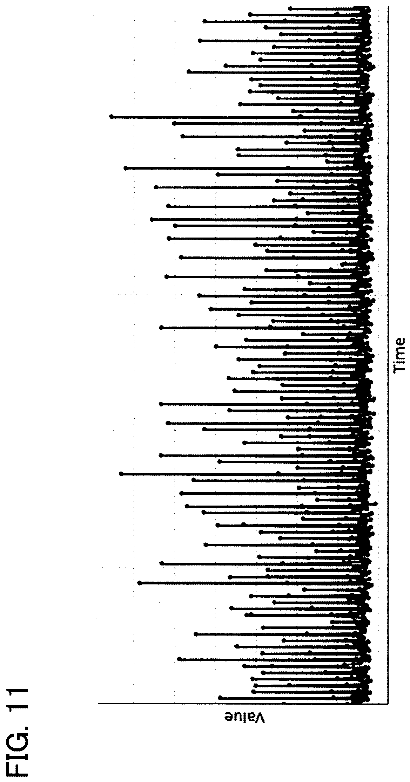

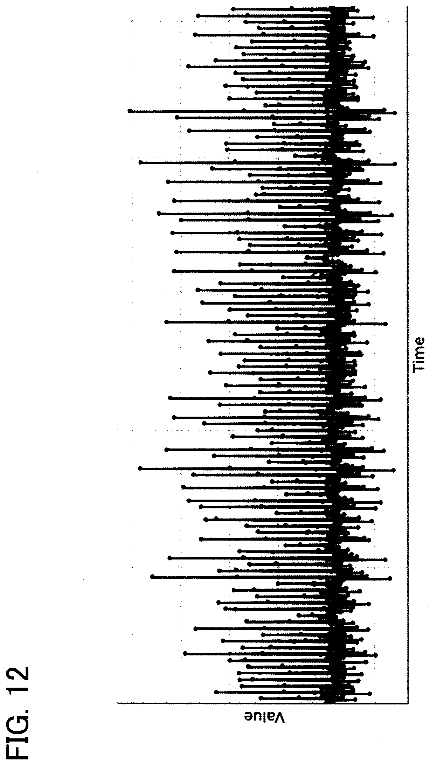

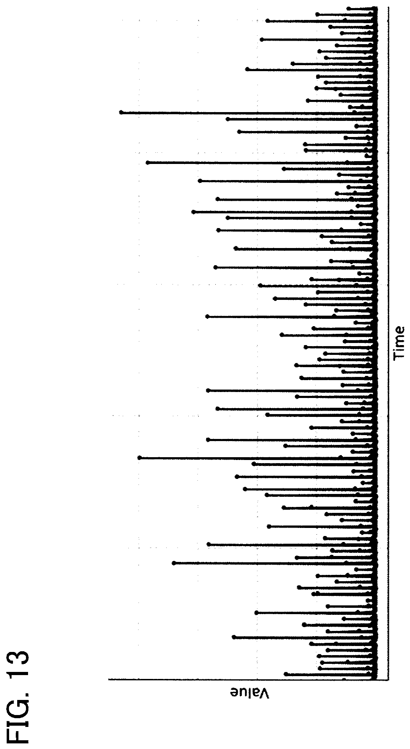

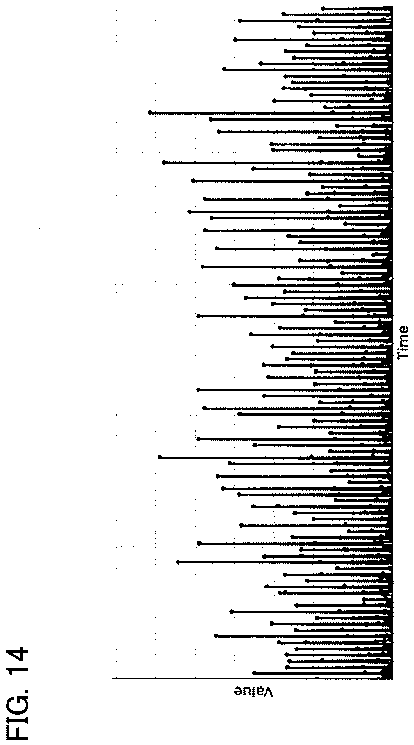

For example, Fig. 12 shows a result obtained by the bandpass filtering processing of the processed data shown in Fig. 11. In addition, Fig. 13 shows a result obtained by the squaring processing of the processed data shown in Fig. 11. Further, Fig. 14 shows a result obtained by noise level subtraction processing. The noise level subtraction processing means subtracting an average value corresponding to the noise from whole data, or subtracting the lowest value from whole data. These pieces of processed data themselves may be used as the determination result. In addition, an embodiment is exemplified in which a statistical value such as a peak value, which is a difference obtained by subtracting the minimum value from the maximum value in the processed data, or a root mean square, is calculated.

The condition monitoring system 10 according to the present invention preferably includes an output unit 14 which can output the processed data outputted by the measurement data processing unit 11 or the determination result outputted by the diagnosis unit 13, outside the apparatus or to another component of the same apparatus, regardless of whether or not the condition monitoring system 10 includes the diagnosis unit 13. The output destination of the output unit 14 may be a server within a local network, within a field network, or on the Internet, or may be a specific terminal.

The condition monitoring system 10 according to the present invention will be described using an arrangement example in which the system is implemented in accordance with an industrial machine, which is a to-be-monitored apparatus.

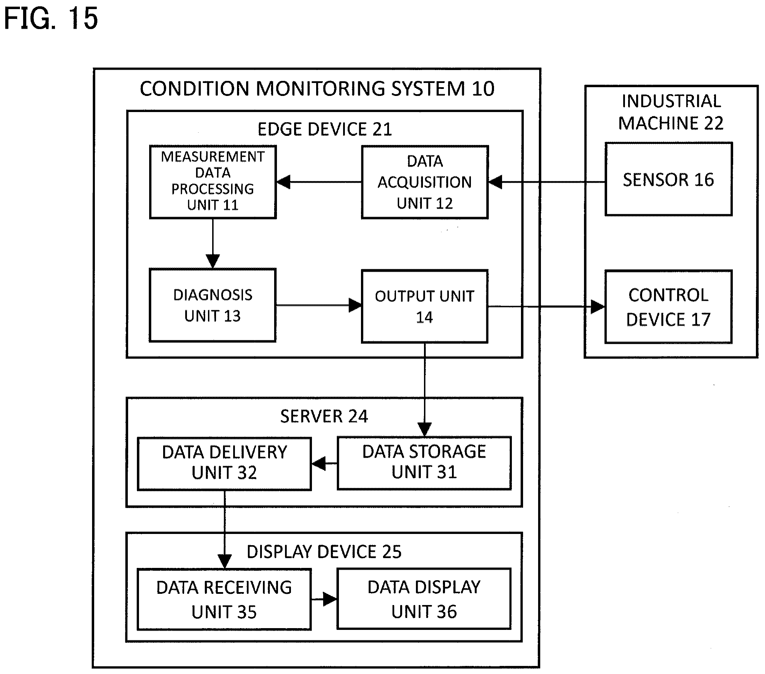

In a first arrangement example shown in Fig. 15, an industrial machine 22, which is a to-be-monitored apparatus, is separated from the condition monitoring system 10. An edge device 21, which constitutes the condition monitoring system 10, is provided with the measurement data processing unit 11, the data acquisition unit 12, the diagnosis unit 13 and the output unit 14, which are described above. The edge device 21 is provided as a part of the condition monitoring system 10 for the industrial machine 22, which is the to-be-monitored apparatus. In Fig.15, only one industrial machine 22 and one edge device 21 are shown, but there may actually be a plurality of industrial machines 22 and edge devices 21. For example, the first arrangement example is preferably available in an embodiment in which sensor inputs of the edge devices 21 is efficiently used in an environment where the plurality of industrial machines 22 are adjacent to each other, or in an embodiment in which an analytical result of one industrial machine 22 is reflected to another industrial machine 22.

In the first arrangement example, the output unit 14 is configured to return the outputted determination result to a control device 17 of the industrial machine 22, which is the to-be-monitored apparatus, that includes a sensor 16 and has transmitted measurement data to the edge device 21. There are actually a plurality of industrial machines 22 and edge devices 21, and each edge device 21 is configured to return the determination result to the industrial machine 22 which has transmitted the measurement data. The industrial machine 22 which receives the determination result is configured to receive the determination result with the control device 17 provided therein. The control device 17 is configured to make control of the industrial machine 22 in accordance with the received determination result. Examples of the control include stopping the industrial machine 22 in question and executing a maintenance function of the industrial machine 22 when the determination result indicates a failure. A communication standard between the industrial machine 22 and the edge device 21 is not particularly limited, and may be a wire connection or a wireless connection.

In the first arrangement example, on the other hand, the output unit 14 is configured to transmit the outputted determination result to a server 24, which constitutes the condition monitoring system 10. The determination result can not only be directly used by the individual industrial machines 22 but also be stored in the server 24, for statistical analysis or use. The condition monitoring system 10 may include a plurality of edge devices 21, and it is desirable from the point of view of aggregation and statistics that pieces of information on all edge devices 21 are aggregated in the server 24 for collecting the pieces of information. The server 24 may be a single server, may be a group of servers, or may be a cloud server. The server 24 preferably includes a data storage unit 31 configured to receive and store the processed data from the output unit 14 of the edge device 21. Examples of the data storage unit 31 include, but are not particularly limited to, long-term storage media such as a magnetic disc and a solid-state drive (SSD). In addition, the server 24 preferably further includes a data delivery unit 32 configured to output the processed data or data further having converted and edited the processed data, to a display device 25. The data delivery unit 32 may be a wire or wireless network interface, or may be a video standard such as HDMI (registered trademark) or DisplayPort for displaying. If the data delivery unit 32 is a network interface, the network interface is preferably shared even when the processed data is received from the above-described output unit 14. Further, the server 24 includes a control unit (not shown) configured to make these controls.

In the first arrangement example, the condition monitoring system 10 includes the display device 25 configured to receive and display the determination result received from the data delivery unit 32 of the server 24, data obtained by using the determination result, or the like. The display device 25 is configured to display information transmitted from the data delivery unit 32 so that an observer can determine the information mainly in a visual manner. The display device 25 includes a data receiving unit 35 configured to receive a video signal or data transmitted from the data delivery unit 32, and a data display unit 36 which provides an actual display screen. Specifically, the display device 25 may be a display monitor itself, or may be a computer terminal with a display monitor. If the display device 25 is a display monitor itself, connection with the server 24 is preferably provided by a cable for video standard. If the display device 25 is a computer terminal, connection with the server 24 is preferably provided by a network cable, a wireless antenna, or the like. Examples of the data display unit 36 include an LED lamp, a cathode-ray tube, a liquid crystal monitor, and an organic EL monitor.

Furthermore, the condition monitoring system 10 of the first arrangement example may include devices or functions other than those described above. For example, an embodiment is exemplified in which the condition monitoring system 10 includes, instead of the display device 25 or together with the display device 25, a speaker configured to emit warning sounds, guidance voices, or others.

As the first arrangement example, a system is exemplified in which the condition monitoring system 10 monitors a plurality of wind turbines, which are the industrial machines 22 as the to-be-monitored apparatuses and constitute a wind power generation facility, wherein the edge device 21 is attached to each of the wind turbines. The control device 17 of the individual wind turbine makes control of the corresponding wind turbine in accordance with the determination result received from the edge device 21. Examples of the control include making emergency stop when abnormality is detected and restricting power depending on the abnormality level. On the other hand, the server 24 having received the determination result accumulates the determination result in the data storage unit 31 and delivers the determination result to the display device 25. The display device 25 is configured to display the determination result delivered from the server 24 to provide a manager of the wind power generation facility with information.

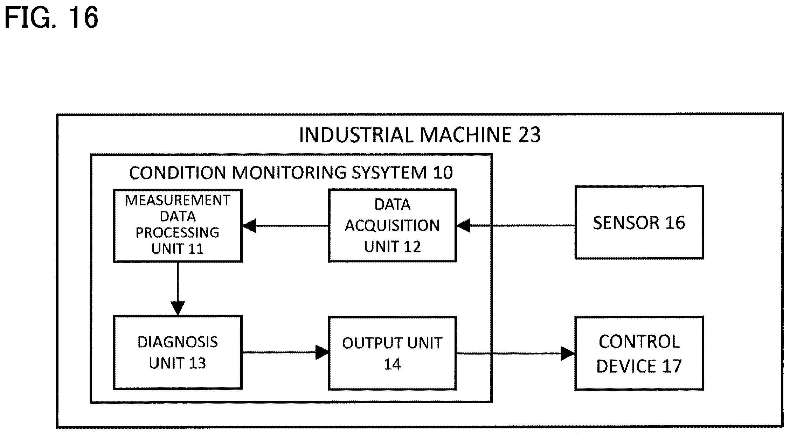

Next, in a second arrangement example shown in Fig. 16, the condition monitoring system 10 is built in the industrial machine 23, which is the to-be-monitored apparatus. The condition monitoring system 10 is configured to acquire (measure), process and diagnose a signal of the sensor 16 located in the industrial machine 23. The determination result is outputted to the control device 17, which constitutes a part of the industrial machine 23. The control device 17 makes control of the industrial machine 23 using the determination result.

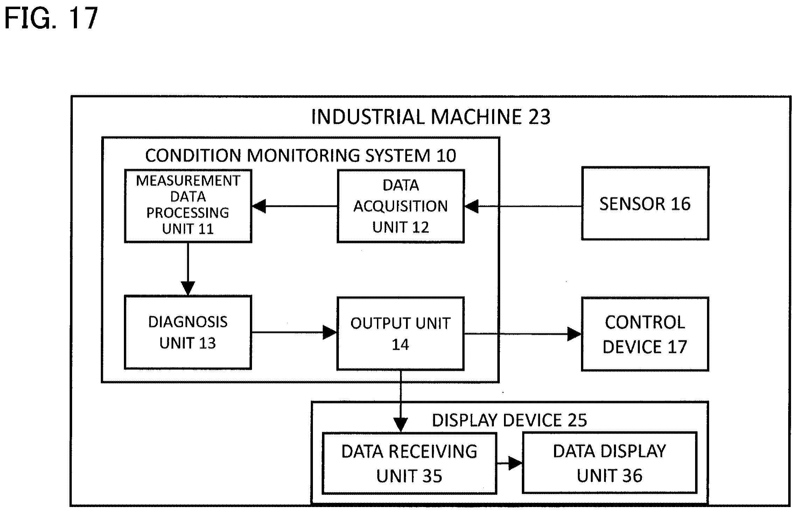

In addition, an applied form of the second arrangement example is exemplified in which the server 24 or the display device 25 of the above-described first arrangement example, to which the determination result is outputted from the output unit 14, is connected to the second arrangement example shown in Fig. 16. For example, the display device 25 may constitute a part of the industrial machine 23. Such a form is shown in Fig. 17. In this case, the output unit 14 is configured to make output to a portion equivalent to the data receiving unit 35 of the display device 25 in accordance with a display standard.

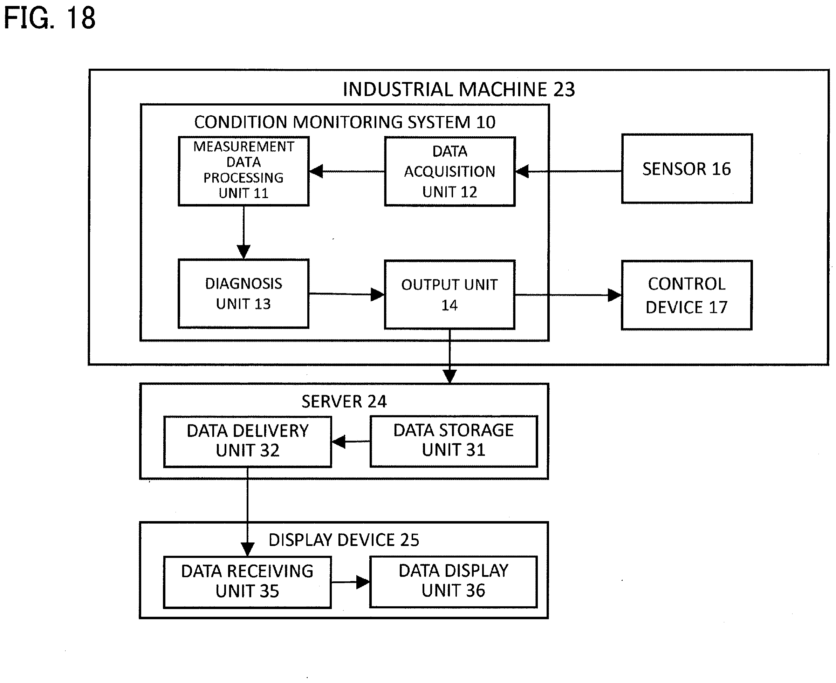

Further, a further applied form of the second arrangement example is exemplified in which the server 24 and the display device 25 are added to the second arrangement example shown in Fig. 16. Such a form is shown in Fig. 18. The output unit 14 serves as a network interface and is configured to transmit data to the server 24 located outside the condition monitoring system 10, and the server 24 has a role in data storage and transmission to the display device 25. This form makes it possible to make data collection or the like while avoiding the enlargement of the industrial machine 23 itself.

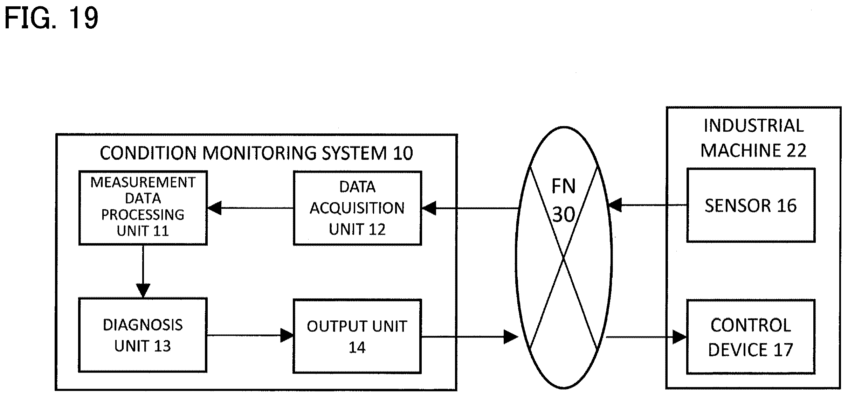

And next, in a third arrangement example shown in Fig. 19, the condition monitoring system 10 is configured to transmit and receive signals via a field network 30 (FN30). The condition monitoring system 10 is configured to acquire (measure), process, and diagnose a sensor signal received from the sensor attached to the industrial machine 22 via the field network 30. The determination result is transmitted (uploaded) to the field network 30 and is then transmitted to the control device 17 of the industrial machine 22 either directly or after being subjected to appropriate processing. The control device 17 of the industrial machine 22 is configured to control the industrial machine 22 in accordance with the determination result from the field network 30.

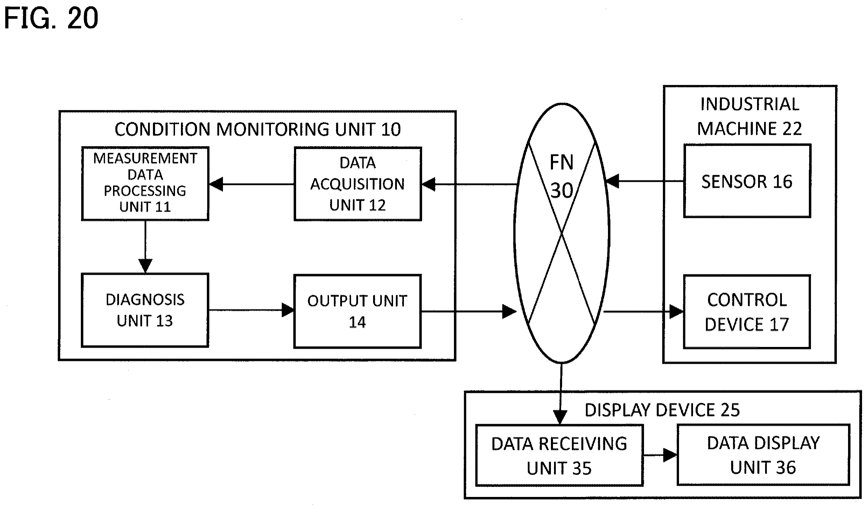

In addition, the display device 25 shown in the above-described first arrangement example may be added to the third arrangement example shown in Fig. 19 as a part of the condition monitoring system 10 so that the determination result is transmitted from the output unit 14 to the data receiving unit 35 and the determination result is displayed on the data display unit. An applied form is exemplified in which the display device 25 is located in the field network 30 to display the determination result. Such a form is shown in Fig. 20.

Further, a further applied form is exemplified in which the server 24 connected to the field network 30 and the display device 25 connected to the server 24 are further added to the third arrangement example shown in Fig. 19 or the applied form shown in Fig. 20.

The condition monitoring system according to the present invention makes it possible to, by processing with the subdivision data, significantly reduce required computational resources in comparison with the conventional method of calculating all pieces of time-series data in a lump, and to monitor the condition of the to-be-monitored apparatus even in an inexpensive and power-saving terminal such as an edge device. The implementation form is not limited to the above-described arrangement examples, and other apparatuses that use the obtained determination results via the server or the field network, in a direct connection manner, or in a built-in manner, may be added as appropriate. Devices directly connected to or built in the condition monitoring system are preferably ones that can be added in an inexpensive and power-saving manner.

### DESCRIPTION OF REFERENCE NUMERALS

10: Condition monitoring system
11: Measurement data processing unit
12: Data acquisition unit
13: Diagnosis unit
14: Output unit
16: Sensor
17: Control device
21: Edge device
22: Industrial machine
23: industrial machine
24: Server
25: Display device
30: Field network
31: Data storage unit
32: Data delivery unit
35: Data receiving unit
36: Data display unit

## Claims

1. A condition monitoring system comprising:
a measurement data processing unit configured to calculate at least one piece of processed data from measurement data,
the measurement data processing unit being configured to execute:
a subdivision step of subdividing time-series data along time series in a time direction, the time-series data being the measurement data or first processed data calculated from the measurement data;
an FFT step of calculating spectral data by fast Fourier transform for each piece of subdivision data obtained by subdividing the time-series data;
a statistical step of extracting at least one partial spectrum of a portion of bands from the spectral data, and calculating at least one amount of statistics of the at least one partial spectrum; and
an integration step of arranging the at least one amount of statistics in a time series order of original pieces of the subdivision data to obtain the at least one piece of processed data.

2. The condition monitoring system according to claim 1, wherein data along time series of any one of physical quantities of a to-be-monitored apparatus that are a jerk, an angular jerk, an acceleration, an angular acceleration, a displacement, an angular displacement, a position, a phase and a pressure, is used as the measurement data.

3. The condition monitoring system according to claim 1 or 2, further comprising a diagnosis unit configured to execute:
a second FFT step of calculating second spectral data by fast Fourier transform from the at least one piece of processed data; and
a determination step of calculating a determination result which is a statistical value or a determination value, from the second spectral data.

4. The condition monitoring system according to claim 3, wherein the statistical value in the determination step of the diagnosis unit is any one of a maximum, a sum, a mean, or a root mean square of the second spectral data.

5. The condition monitoring system according to any one of claims 1 to 4, wherein in the statistical step, the portion of bands to be extracted is changeable, and plural pieces of processed data based on different portions of the bands from each other are calculated as the at least one piece of processed data.

6. The condition monitoring system according to any one of claims 1 to 5, wherein in the subdivision step, the number of pieces of the subdivision data is set to a preset number of data pieces, or the number of subdivisions of the subdivision data is set to a preset number of divisions.

7. The condition monitoring system according to any one of claims 1 to 6, wherein the subdivision step is started before the measurement data processing unit acquires all pieces of the measurement data, or the subdivision step is started after the measurement data processing unit acquires all pieces of the measurement data.

8. The condition monitoring system according to any one of claims 1 to 7, wherein in the subdivision step, the time-series data is subdivided (i) such that each piece of subdivision data that is adjacent to one piece or two pieces of subdivision data in time series overlaps with the one piece or the two pieces by a predetermined portion, or (ii) such that each piece of subdivision data that is adjacent to one piece or two pieces of subdivision data is separated from the one piece or the two pieces by a predetermined portion and a portion of the time-series data is discarded.

9. The condition monitoring system according to any one of claims 1 to 8, wherein the spectral data is any one of an amplitude spectrum, a power spectrum, or a power density spectrum.

10. The condition monitoring system according to any one of claims 1 to 9, wherein the at least one amount of statistics is any one of a maximum, a sum, a mean, or a root mean square of the at least one partial spectrum.
